# EUROPEAN PATENT APPLICATION

(11) **EP 2 471 371 A1**
(43) Date of publication of application: **04.07.2012**
(21) Application number: 10197180.2
(22) Date of filing: 28.12.2010
(51) Int. Cl.: A21B 1/14, A21B 1/22

(54) **Oven for baking food products**

(71) Applicant: Bakkersland IP B.V., 5321 JV Hedel (NL); FRI-JADO B.V., 4878 AA Etten-Leur (NL)
(72) Inventor: Van Boven, Patrick, 4878 AA, Etten-Leur (NL)
(74) Representative: Prins, Hendrik Willem

(57) **Abstract**

The present invention relates to an oven for baking food products, such as bread, rolls, croissants and apple turnovers, comprising:
an oven housing provided with heating means and a door for closing an opening of the oven housing,

wherein the oven housing is provided with at least one support for the food products, and
wherein the heating means comprise at least one first heating element extending above and/or beneath the support, and at least one separate second heating element extending between the first heating element and the door, and to the heating means therefore.

## Description

The present invention relates to an oven for baking food products, such as bread, rolls, croissants and apple turnovers.

An oven for baking food products comprises an oven housing provided with heating means and a door for closing an opening of the oven housing. The heating means are present for generating and maintaining within the oven housing a baking temperature such that under controlled conditions the food products are baked. In this respect it is important that when several or a plurality of food products are baked at the same time within the same oven, that substantially all food products reach the same extent a baked result and colour at the end of the baking procedure. Accordingly, it is possible to provide food products having substantially the same outer baked appearance and the same baked structure and consistency. For instance, in relation to bread, the crumb should be substantially of the same quality and to the same extent baked at the end of the baking procedure.

Within the oven, particularly when the oven comprises several oven compartments arranged above one another, a circulation of air may generated. This occurs for instance under the influence of the relatively cold oven door, such as an oven door provided with one or more glass windows. Such cooler wall will generate a downstream of relatively cool air and forms a cooler area in the oven. Such cooler area will have a negative effect on the progress of the baking procedure for food products that are arranged in this cooler area, and thus within the oven housing adjacent to the cooler oven door.

A solution to the presence of this relatively cool area within the oven housing could be an increase of the heating power such that the cool oven wall will be warmer. However an increase of the heating power will result in a heating to an excessive extent of food products that are not arranged in the cooler area, that is near the door of the oven.

The present invention has for its object to provide an oven for baking food products, that provides an elegant solution to the difference in baking performance within the oven housing for food products that are arranged near the door of the oven.

Therefore, the present invention provides for an oven for baking food products, such as bread, rolls, croissants and apple turnovers, comprising:
an oven housing provided with heating means and a door for closing an opening of the oven housing,
wherein the oven housing is provided with at least one support for the food products, and
wherein the heating means comprise at least one first heating element extending above and/or beneath the support, and at least one separate second heating element extending between the first heating element and the door.

The present invention is based on the insight, that by dividing the heating means in first and second heating means and arrange the second heating means near the door of the oven, the heating power of the second heating means can be adjusted such as to compensate for the temperature difference and the relating cool air convection near the door. Such separate heating of various areas of the oven will not interfere with the optimal heating of the food products that are arranged within the oven remote of the door and do not experience the negative effect of the cold oven door.

According to a preferred embodiment the heating means extend above the support and freely expose to the food products on the support. Accordingly, due to the free exposure of the food products towards the heating means above the food products, an optimal heating and baking from above is guaranteed.

If the oven comprises at least two oven compartments arranged above each other, then it is preferred to arrange two heating means between the two compartments. Accordingly, it is possible to heat both compartments separately by adjacent heating means. In order to reduce or avoid interference from the heating of both heating means to the other compartment, it is preferred that the two heating means are separated by a separation plate. Accordingly, the separation plate will form an insulation, or a moderately heated plate thereby avoiding excessive heating of the remote heating means to the other oven compartment. In addition, such separation plate may also be used to shield a compartment from radiation heath of one of the (more remote) heating means, when radiation heath of the two heating means would negatively affect the baking process.

In order to have effectively and optimally supported and baked the food products which are arranged on the support, it is beneficial when the support comprises a supporting grating. Due to the use of a support grating, to a larger extent are the food products freely supported on the grating and therefore exposes to a larger extent to heating means beneath the support.

In the alternative the support may comprise a closed support plate. Accordingly, the heating from beneath might be less effective, but remnants of food products in the prebaked ore baked form may be collected on the closed support plate. Accordingly, such an oven compartment is more easily cleaned by just cleaning or taking out and clean outside of the oven the closed support plate.

In order to have a reduced height of the oven and also to allow for a heating from above or from beneath in a substantially homogeneous manner by the heating means, it is preferred the first heating means have a substantially planar form. In this respect it is beneficial that the first heating means comprise a serpentine heating tube, so that over substantially the whole surface of the planar first heating means the same heating power is experienced by the food products.

In order to control in the oven and in particular in each of the oven compartments the baking process, the heating means comprise temperature control means. Accordingly, the baking result may be the same for the same food products in the entire oven, but also allows for baking in the same oven different food products in different oven compartments.

Generally, the heating power of the first heating element and of the second heating element may be selected such as to allow for the optimum baking of the food products in the oven. In particular, it turned out that for the best baking of the food products it is preferred that the heating power of the first heating element is a fraction (a part) of the heating power of the second heating element. Accordingly, the second heating element is substantially used to avoid the generation and maintenance of a downward relatively cold air stream while for the other part of the oven optimal baking conditions are maintained and controlled at the highest flexibility.

Another aspect of the invention relates to heating means, having a planar form, and comprises first heating means comprising a serpentine heating tube and second heating means extending laterally along the serpentine heating tube.

Mentioned and other advantageous of the oven of the present invention will be further illustrated with reference to the annexed drawings for an embodiment of the invention. It will be understood that the embodiment is only given for information purposes and not intend to limit the invention in any extent.

In the drawings:
Figure 1 is a partly broken way perspective view of an oven according to the invention;
Figure 2 is a top view of a heating means according to the invention;
Figure 3 is a perspective cross-sectional view according to the line III-III in figure 2; and
Figure 4 is a cross-sectional view according to arrow IV in figure 1.

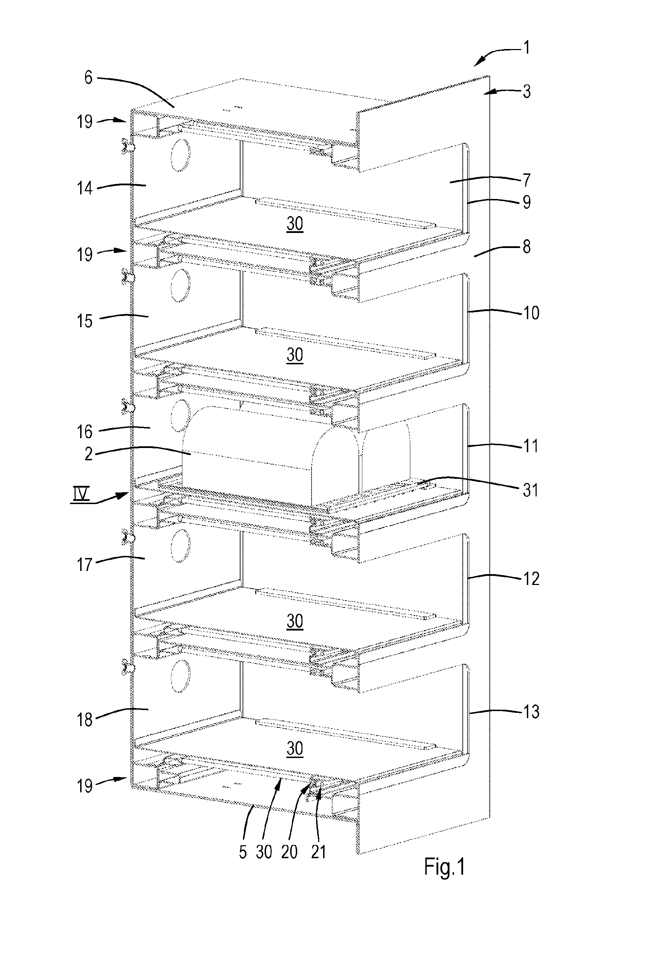

Figure 1 shows an oven 1 according to the invention for baking food products, such as bread 2. The oven 1 comprises an oven housing 3 having a rear wall 4, a bottom wall 5, a top wall 6 and a side wall 7. The oven housing further comprises a front wall 8 which is provided with openings 9-13 which register with oven compartments 14-18 arranged one above the other. The oven 1 comprises heating means 19 which are arranged in between the oven compartments 10-12, and at the top wall 6 and bottom wall 5. The oven 1 further comprises supports 20 in the form of a closed support plates 30 and in the form of support grating 31, both for supporting food products 2 in the oven 1 above and beneath the heating means 19 according to the invention.

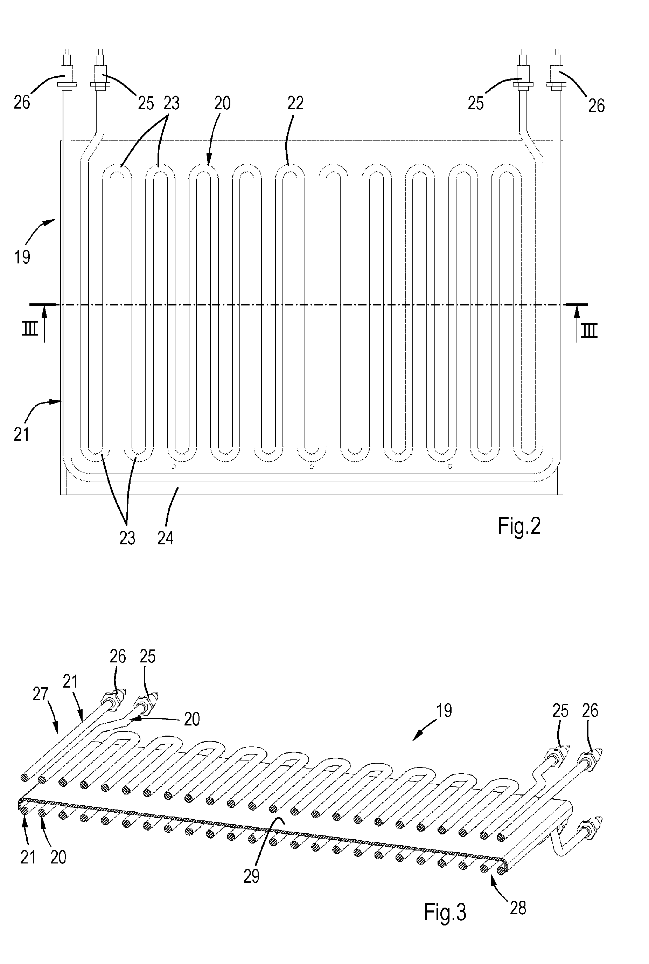

Figure 2 shows more in detail the heating means 19 according to the invention.

The heating means 19 comprise a first heating element 20 and a second heating element 21. The first heating element 20 has the form of a serpentine heating tube 22 comprising twenty one serpentines 23. The second heating element 21 has the form of a heating tube which extends laterally along the serpentine heating tube 20 over three sides of the first heating element 20. Accordingly, there is provided a surface 24 which is substantially homogeneously provided with equally distributed heating tubes, so that the heath released by the heating means 19 according to the invention is substantially uniform emitted over the entire surface 24.

The heating elements 20 and 21 comprise connectors 25 and 26 by which they are mounted in the rear wall 4 and connected to a not shown power supply unit. The first and second heating element 20 and 21 are independently electrically powered so that the heating power of both heating elements 20 and 21 can independently adjusted as required according to the invention in order to neutralize the adverse effect of the cold door (not shown), and openings 9-13 on the performance of the baking process in the oven 1.

Figure 3 shows that the heating means 19 provided in between two oven compartments 15-18 comprise two sets 27 and 28 of each a first heating element 20 and a second heating element 21. Both sets 27 and 28 are separated by a separation plate 29. Accordingly, the upper set 27 is used for heating the oven compartment above this set 27 of heating element 20 and 21, whereas the set 28 is used for heating the oven compartment beneath the set 28 of first and second heating elements 20 and 21. The influence of both heating means sets 27 and 28 is diminished by the use of the separation plate 29.

Referring to figure 1, it is apparent that the heating means 19 near the bottom wall 5 comprise a set 30 of a first heating element 20 and a second heating element 21 as is shown in top view in figure 2.

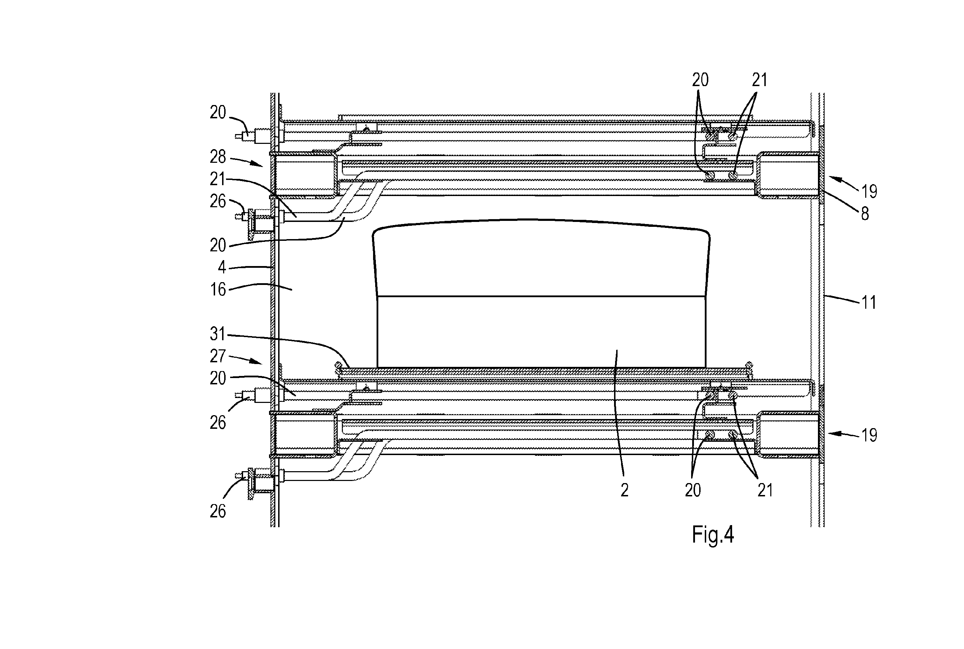

Finally figure 4 shows more in detail the construction of the oven compartment 16. The oven compartment 16 comprises heating means 19 at the upper compartment side and at the bottom compartment side. The set 27 of first heating element 20 and second heating element 21 are used for heating the food product 2 at its under side, whereas the heating elements 20 and 21 of the set 28 are used for heating the food product from its upper side. Accordingly, there is an even baking of the food product within the oven compartment 16. Still, near the opening 11 where influence of the cold oven door (not shown) or when opening the oven, may be neutralized by separately heating the heating elements 21. Obviously, when preferred for special food products only the upper set 28 or the lower set 27 can be used for heating the food product.

In a practical embodiment, the heating power of the second heating element is about 1 W/m², and the heating power of the first heating element is about 0.4 W/m². Still optimal heating and baking of the food products 2 is possible.

Not shown is the control units for separately heating of the first and second heating elements 20 and 21 which are independent for each of the oven compartments. Accordingly, differences in temperature regimes in the various oven compartments may be compensated for or intentionally maintained so that the various oven compartments the same or different food products may be baked, respectively.

Although described in combination it will be obvious to the skilled person that the specific combination and configuration of the two types of heating means and the positioning of the heating elements above or beneath each other as described hereinbefore in combination can be used separately with the formulated objectives and related advantages.

## Claims

1. Oven for baking food products, such as bread, rolls, croissants and apple turnovers, comprising:
an oven housing provided with heating means and a door for closing an opening of the oven housing,
wherein the oven housing is provided with at least one support for the food products, and
wherein the heating means comprise at least one first heating element extending above and/or beneath the support, and at least one separate second heating element extending between the first heating element and the door.

2. Oven according to claim 1, wherein the heating means extend at least partially above the support and freely expose to the food products on the support.

3. Oven as claimed in claim 1 or 2, wherein the oven comprises at least two oven compartments arranged above each other, and two heating means are arranged between the two compartments.

4. Oven as claimed in claim 3, wherein the two heating means are separated by a separation plate.

5. Oven according to any of the claims 1-4,
wherein the support comprises a support grating.

6. Oven according to any of the claims 1-4,
wherein the support comprises a support plate.

7. Oven according to any of the claims 1-6,
wherein the first heating means have a substantially planar form.

8. Oven according to any of the claims 1-7,
wherein the first heating means comprises a serpentine heating tube.

9. Oven according to any of the claims 1-8,
wherein each heating means comprise temperature control means.

10. Oven according to any of the claims 1-9,
wherein the heating power of the second heating element is a fraction of the heating power of the first heating element.

11. Oven according to claim 10, wherein the heating power of the second heating element is in the range of about 0.5 - 2 W/cm², preferably 0.8 - 1.5 W/cm² such as 1 W/cm², and the heating power of the first heating element is in the range of about 0.1 - 0.5 W/cm², preferably 0.2 - 0.4 W / cm² .

12. Heating means, having a planar form, and comprises first heating means comprising a serpentine heating tube and second heating means extending laterally along at least a part of the serpentine heating tube.
